# FASCICULE DE BREVET EUROPEEN

(11) **EP 3 139 077 B1**
(45) Date de publication et mention de la délivrance du brevet: **04.07.2018**
(21) Numéro de dépôt: 16194596.9
(22) Date de dépôt: 10.04.2013
(51) Int. Cl.: F16L 33/04, F16L 21/06, F16L 23/02, F16L 23/08, F16L 33/10

(54) **COLLIER DE SERRAGE**
SCHLAUCHKLEMME
CLAMPING COLLAR

(30) Priorité: 13.04.2012 FR 1253413
(43) Date de publication de la demande: 08.03.2017
(62) Demande divisionnaire de: 13719990.7
(73) Titulaire: Etablissements CAILLAU, 92130 Issy-les-Moulineaux (FR)
(72) Inventeur: RIGOLLET, Nicolas, 41200 Romorantin (FR); PREVOT, Fabrice, 41130 Selles Sur Cher (FR)
(74) Mandataire: Intès, Didier Gérard André

(56) Documents cités:
- WO-A1-2006/109001
- DE-A1- 4 119 171

## Description

La présente invention concerne un collier de serrage présentant une ceinture métallique sensiblement cylindrique, une paire d'oreilles saillantes ayant des parties avant respectives en vis-à-vis, une tige de serrage disposée dans des perçages de ces oreilles et deux organes de serrage coopérant avec ladite tige et, respectivement, avec des parties d'appui des deux oreilles de la paire, pour pouvoir rapprocher ces oreilles de manière à provoquer le serrage de la ceinture par une diminution du diamètre de cette dernière, au moins l'une des oreilles de la paire étant une oreille à prolongement, la partie d'appui de cette oreille étant formée dans un prolongement de ladite oreille, qui est replié vers l'arrière de cette dernière, à l'opposé de l'autre oreille de la paire, et qui présente un perçage pour la tige de serrage situé en regard d'un perçage de la partie avant de la même oreille, un espace d'entretoisement étant ménagé entre le prolongement replié et ladite partie avant.

Un collier de ce type est connu, par exemple par la demande de brevet PCT WO 2006/109001 et par la demande de brevet PCT WO 2010/004233.

Ces colliers donnent globalement satisfaction, en particulier dans le cas où une rigidité importante des oreilles de serrage est recherchée. En particulier, comme indiqué dans la demande WO 2006/109001, le fait d'exercer les efforts de serrage sur le prolongement de l'oreille, plutôt que sur sa partie avant, permet de limiter la déformation de cette partie avant lors du serrage, préservant ainsi dans une certaine mesure la circularité du collier. Toutefois, dans les documents précités, le prolongement est relié rigidement à la partie avant de l'oreille. Il en résulte que, en réalité, des efforts de serrage élevés s'exerçant sur le prolongement se transmettent à la partie avant de l'oreille qui se trouve ainsi sollicitée en déformation, malgré le fait que les efforts de serrage s'exercent prioritairement sur le prolongement.

L'invention vise à améliorer cet état de la technique, en diminuant encore les risques de déformation de la partie avant de l'oreille sous l'effet des efforts de serrage.

Ce but est atteint grâce au fait que le prolongement et la partie avant de l'oreille à prolongement sont reliés par une portion de bande formant une boucle de liaison délimitant un tunnel axial dont les deux extrémités axiales sont ouvertes, ce tunnel étant conformé de telle sorte que l'inclinaison entre le prolongement et la partie avant de l'oreille à prolongement peut changer lors du serrage du collier et au fait que la boucle de liaison présente une flexibilité accrue par rapport au prolongement et à la partie avant de l'oreille à prolongement.

Avec l'invention, on identifie, pour l'oreille à prolongement, la partie avant proprement dite, le prolongement proprement dit et, entre ces deux portions, la boucle de liaison en forme de tunnel. Ainsi, lors du serrage, le prolongement peut être déformé de manière à s'incliner par rapport à la partie avant de l'oreille, en jouant sur la flexibilité de la boucle de liaison. Lors du serrage, la courbure de la boucle de liaison est modifiée pour permettre la variation de l'inclinaison entre le prolongement et la partie avant de l'oreille, sans solliciter cette partie avant en déformation. En d'autres termes, la boucle de liaison est moins rigide que la partie avant et le prolongement.

Avantageusement, pour l'oreille à prolongement, l'un des éléments constitués par le prolongement et par la partie avant porte au moins une patte de maintien repliée dans le tunnel par l'une des extrémités axiales ouvertes de ce dernier.

Cette patte de maintien, de conformation extrêmement simple, permet de caler les positions relatives de la partie avant et du prolongement dans le tunnel. En d'autres termes, elle évite que, sous l'effet de ses déformations dues au serrage, le prolongement n'ait tendance à remonter radialement par rapport à l'oreille. Ceci assure que les positions relatives du perçage de la partie avant et du perçage du prolongement restent optimales pour éviter de trop solliciter la tige de serrage en flexion, sous l'effet des efforts de serrage.

Avantageusement, pour l'oreille à prolongement, au moins l'un des éléments constitués par le prolongement et par la partie avant comporte au moins une joue d'entretoisement qui s'étend vers l'autre desdits éléments, sensiblement parallèlement à la tige de serrage.

Cette joue d'entretoisement contribue à la rigidité de l'élément qu'elle équipe (prolongement ou partie avant de l'oreille) alors que la boucle de liaison reste quant à elle flexible. Lorsque la joue d'entretoisement est latérale, son bord radial externe délimite le bord radial interne du tunnel formé par la boucle de liaison.

Avantageusement, le prolongement présente deux joues latérales d'entretoisement, tandis que la partie avant de l'oreille à prolongement présente deux rebords de rigidification qui s'étendent vers le prolongement et sont respectivement formés sur les deux bords de ladite partie avant opposés axialement, et les bords libres des joues latérales d'entretoisement s'étendent respectivement contre la face interne de chacun desdits rebords.

Les joues latérales rigidifient le prolongement, tandis que les rebords de rigidification rigidifient la partie avant de l'oreille. En revanche, la boucle de liaison est dépourvue de rebord ou de joue et constitue donc une zone de flexibilité accrue par rapport à la partie avant de l'oreille et au prolongement.

Avantageusement, la ceinture du collier ayant une section convexe vue de l'extérieur, le prolongement présente deux joues latérales d'entretoisement qui s'étendent, vers l'axe du collier au-delà du sommet de ladite section, de part et d'autre dudit sommet.

Ainsi, ces joues latérales contribuent au calage de l'oreille par rapport à la ceinture du collier, en évitant les débattements de l'oreille par rapport à la ceinture, dans la direction de l'axe du collier. Ces joues sont d'autant plus efficaces qu'elles sont elles-mêmes calées contre les rebords de la partie avant de l'oreille précédemment évoqués.

Avantageusement, le prolongement présente des joues d'entretoisement formées par emboutissage.

Ainsi, les joues d'entretoisement du prolongement peuvent être formées par une seule frappe. L'écrouissage important ainsi obtenu améliore encore la rigidité du prolongement.

Avantageusement, la partie avant de l'oreille à prolongement présente deux rebords de rigidification qui s'étendent vers le prolongement et sont respectivement formés sur les deux bords de ladite partie avant opposés axialement, et l'extrémité de chaque rebord éloignée de l'axe du collier porte une patte de maintien qui est repliée dans le tunnel axial.

Les pattes de maintien peuvent être donc être formées par des extensions radiales des rebords de rigidification, qui sont repliées dans le tunnel axial, de chaque côté de ce dernier. La structure du collier peut ainsi être symétrique, et le prolongement se trouve calé sur ses deux côtés axiaux. Avantageusement, les deux oreilles de la paire sont des oreilles à prolongement de conformation analogue.

Ainsi, chaque oreille présente une partie avant (les deux parties avant se font face) et un prolongement, les prolongements étant reliés aux parties avant par des boucles de liaison flexibles en forme de tunnel. Lors du serrage, les déformations dues à l'effort de serrage et à la diminution du diamètre du collier se répartissent donc entre les prolongements respectifs de chaque oreille, ce qui présente notamment l'avantage de limiter les contraintes de flèche qui s'exercent sur la tige de serrage. Avantageusement, la tige de serrage étant filetée, le perçage du prolongement de l'oreille à prolongement (ou de l'une des oreilles à prolongement, si les deux oreilles sont à prolongement) présente un collet taraudé coopérant par vissage avec la tige de serrage tandis que ladite tige est montée lâche à travers le perçage de la partie avant de ladite oreille.

Grâce à ces dispositions, il n'est pas nécessaire d'utiliser un écrou séparé du collier pour serrer la tige de serrage. Le collier de serrage peut donc être simplement constitué de la ceinture du collier, avec ses deux oreilles à prolongement, et d'une vis. La tête de la vis prend appui contre le prolongement de l'une des oreilles, tandis que la tige filetée de la vis se visse dans le collet taraudé du prolongement de l'autre oreille. Comme indiqué précédemment, lors du serrage, l'inclinaison du prolongement se modifie d'elle-même grâce à la flexibilité conférée par la boucle de liaison en forme de tunnel. Ainsi, les filets de la vis restent parfaitement engagés dans les filets du collet taraudé de ce prolongement, sans subir d'ovalisation sous l'effet de la tension de serrage. En effet, dans la mesure où le collet taraudé est situé dans le prolongement déformable, qui s'incline naturellement sous l'effet de la réduction du diamètre du collier, les efforts de serrage s'exercent purement dans l'axe de la tige de serrage. Lors du serrage du collier, en particulier lorsqu'il s'agit d'un collier de diamètre relativement petit qu'on souhaite ouvrir assez largement pour le mettre en place sur l'objet à serrer, l'orientation angulaire des oreilles varie fortement entre les états « collier ouvert » et « collier fermé ». Le fait que le collet taraudé soit solidaire du prolongement dont l'inclinaison peut varier par rapport à celle de l'oreille permet de faire en sorte que, malgré la variation de l'orientation des oreilles, l'axe du collet reste aligné sur celui de la tige de serrage pendant toute la phase de serrage. Avantageusement, le perçage de la partie avant de l'oreille à prolongement présente une jupe formant palier pour la tige de serrage. Cette jupe contribue à supporter la tige de serrage lors du serrage, pour limiter encore les contraintes de flèches qui s'exercent sur cette dernière. Comme indiqué, la boucle de liaison présente une flexibilité accrue par rapport au prolongement et à la partie avant de l'oreille à prolongement.

Il est même possible de prévoir que la boucle de liaison soit sécable. Avantageusement, la boucle de liaison présente une largeur, mesurée dans la direction axiale du collier, inférieure aux largeurs du prolongement et de la partie avant de l'oreille à prolongement.

Cette flexibilité accrue de la boucle de liaison peut lui être conférée par une épaisseur moindre ou, surtout, par une largeur diminuée par rapport à celle de la partie avant de l'oreille et du prolongement, ces largeurs étant mesurées selon la direction de l'axe du collier. La boucle de liaison peut avoir la forme d'un fil en boucle, dont la largeur est du même ordre de grandeur que l'épaisseur, mesurée radialement. Si nécessaire, on peut prévoir, pour relier le prolongement d'une oreille à sa partie avant, une ou plusieurs boucles de liaison ainsi formées.

Avantageusement, à l'état non serré du collier, les extrémités axiales ouvertes du tunnel délimité par la boucle de liaison présentent un rayon de courbure compris entre 0.25 et 1.5 fois le rayon de la tige de serrage. La demanderesse a constaté que cette plage de valeur pour le rayon de courbure de la boucle de liaison lui confère la rigidité souhaitée, compte tenu du dimensionnement de la tige de serrage.

L'invention sera bien comprise et ses avantages apparaîtront mieux, à la lecture de la description qui suit, de modes de réalisation représentés à titre d'exemple non limitatif. La description se réfère aux dessins annexés sur lesquels :
- la figure 1 est une vue de côté d'un collier conforme à l'invention, à l'état non serré ;
- la figure 2 est une vue du collier de la figure 1, à l'état serré ;
- la figure 3 est une vue en perspective du collier de la figure 1, sans la tige de serrage, prise selon la flèche III de la figure 1 ;
- la figure 4 est une vue correspondant à celle de la figure 3, montrant une étape de fabrication ;
- la figure 5 est une vue analogue à la figure 4, pour une variante de réalisation de ce collier ;
- la figure 6 est une vue en perspective d'un collier selon l'invention, pour une variante de réalisation ;
- la figure 7 est une vue correspondant à celle de la figure 5, pour une autre variante de réalisation ;
- la figure 8 est une vue de côté d'un collier selon un deuxième mode de réalisation de l'invention, à l'état non serré ;
- la figure 9 est une vue de côté du collier de la figure 8, à l'état serré ;
- la figure 10 est une vue de côté du collier des figures 8 et 9, montrant une étape de fabrication ; et
- la figure 11 est une vue de détail dans la région des prolongements, montrant en perspective une variante de réalisation.

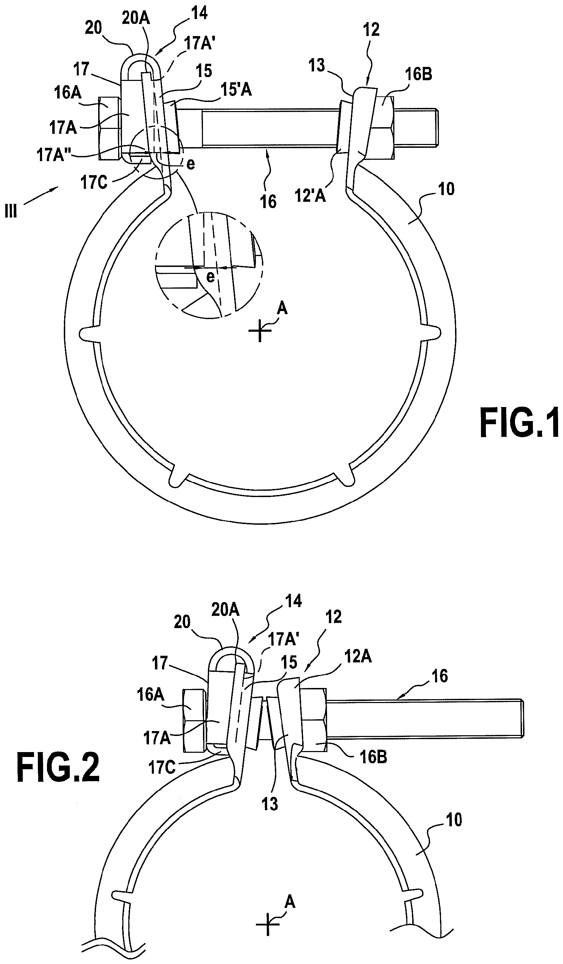

On décrit d'abord le collier selon le premier mode de réalisation, en référence aux figures 1 et 2. Ce collier comprend une ceinture métallique 10 sensiblement cylindrique, avec une paire d'oreilles saillantes, respectivement 12 et 14. Ces oreilles 12 et 14 font saillie sensiblement radialement par rapport à la ceinture 10, la direction radiale étant déterminée par rapport à l'axe A du collier.

Ces oreilles 12 et 14 ont des parties avant, respectivement 13 et 15 en vis-à-vis. Le collier comporte également une tige de serrage 16 qui est disposée dans les perçages de ces oreilles. En l'occurrence, cette tige prend la forme d'une vis, avec une tête 16A, en appui contre l'oreille 14, et un écrou 16B en appui contre l'oreille 12.

En comparant les figures 1 et 2, on comprend que le collier peut être serré par vissage de la vis 16, de manière à rapprocher les oreilles 12 et 14 l'une de l'autre, réduisant ainsi le diamètre du collier. En l'espèce, l'oreille 12 est simple, l'écrou 16B coopérant avec la face arrière, c'est-à-dire opposée à l'oreille 14, de cette oreille 12. On voit que l'oreille 12 présente un rebord périphérique vers l'arrière 12A, avec des méplats adaptés à la forme, par exemple hexagonale, de l'écrou 16B, pour caler ce dernier en rotation. C'est donc par une rotation de la tête de la vis 16A que l'on réalise le vissage.

En tout état de cause, pour l'oreille 12, la partie d'appui avec laquelle coopère l'organe de serrage constitué en l'espèce par l'écrou 16B, est formée par la face arrière de cette oreille, opposée à sa partie avant 13. En revanche, l'oreille 14 est double. Plus précisément, il s'agit d'une oreille à prolongement, dont la partie d'appui est formée dans un prolongement 17 de cette oreille, qui est replié vers l'arrière de cette oreille, c'est-à-dire à l'opposé de l'autre oreille 12.

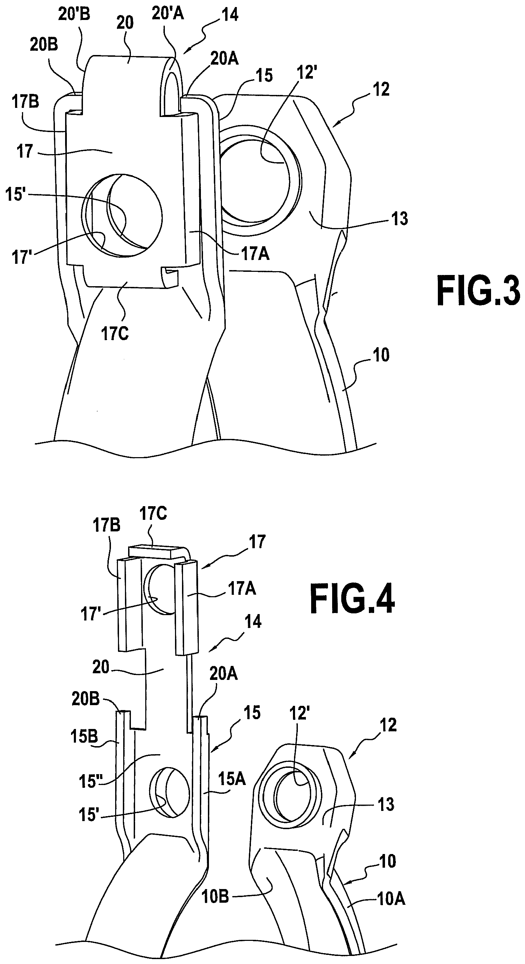

Comme on le voit sur la figure 3, l'oreille 12 présente un perçage 12', la partie avant 15 de l'oreille 14 présente un perçage 15' et le prolongement replié 17 de l'oreille 14 présente un perçage 17', ces perçages étant alignés pour pouvoir être traversés par la tige de serrage. Un espace d'entretoisement E est ménagé entre le prolongement replié 17 et la partie avant 15 de l'oreille 14. En l'espèce, le prolongement 17 présente des joues d'entretoisement, respectivement 17A, 17B et 17C. La largeur de l'espace d'entretoisement E, mesurée selon la direction de la tige de serrage 16, est conditionnée par la largeur des joues d'entretoisement, mesurée dans le même sens.

Les deux joues latérales 17A et 17B sont disposées sur les deux côtés du prolongement 17, considérés dans la direction de l'axe A. On voit sur la figure 1 que le bord supérieur 17A' de la joue 17A vient sensiblement au contact de la face arrière de la partie avant 15 de l'oreille. En revanche, le bord inférieur 17A" de cette joue, de même que le bord de la joue inférieure 17C, sont à légère distance de la face arrière de cette partie avant 15. L'espace d'entretoisement E voit donc sa largeur augmentée de cette distance e dans la région inférieure, entre les joues 17A, 17B et 17C, et la face arrière de la partie avant 15. En revanche, sur la figure 2, l'inclinaison entre le prolongement 17 et la partie avant 15 de l'oreille 14 a été modifiée, et l'on voit que, cette fois, le bord inférieur 17A" de la joue latérale 17A, de même que le bord de la joue inférieure 17C sont en contact de la face arrière de la partie avant 15 de l'oreille, tandis que le bord supérieur 17A' de la joue 17 est à légère distance de cette face arrière.

Au sens de la présente demande de brevet, les éléments des oreilles définis par "supérieurs" sont ceux qui sont les plus distants de l'axe A du collier, tandis que les éléments "inférieurs" sont ceux qui sont les plus proches de cet axe. Le prolongement 17 et la partie avant 15 de l'oreille 14 sont reliés par une portion de bande 20 qui, comme on le voit en particulier sur les figures 1 à 3, forment une boucle de liaison délimitant un tunnel axial dont les deux extrémités axiales, respectivement 20'A et 20'B sont ouvertes. En comparant la figure 1, avant serrage du collier et la figure 2, après ce serrage, on constate que, lors du serrage, la courbure de la boucle de liaison 20 s'est modifiée : la boucle de liaison 7 s'est aplati et son rayon de courbure a augmenté. On voit encore sur les figures 1 à 3 que le prolongement 17 de l'oreille 14 porte deux pattes de maintien latérales, respectivement 22A et 22B, qui sont repliées dans le tunnel formé par la boucle de liaison 20, respectivement par chacune des extrémités axiales ouvertes de ce dernier.

A l'état initial, avant le serrage du collier, la boucle de liaison présente la forme d'un demi-cylindre dont l'axe se trouve dans le plan médian entre la face arrière de la partie avant 15 de l'oreille et la face en vis-à-vis du prolongement.

La figure 4 montre le collier des figures précédentes, avant le pliage du prolongement 17. Dans cet état, ce prolongement 17 s'étend radialement dans la continuité (de manière rectiligne) de la partie avant 15 de l'oreille, et la partie intermédiaire destinée à former la boucle de liaison 20 est alors rectiligne. De même, les pattes de maintien 20A et 20B sont alors rectilignes.

Pour conformer le prolongement et l'amener dans la situation de la figure 1, la partie de liaison est pliée de manière à former la boucle de liaison 20, jusqu'à ce que les joues latérales 17A et 17B soient ramenées sensiblement contre la face arrière 15" de la partie avant 15 de l'oreille. On voit que cette partie avant 15 présente deux rebords de rigidification, respectivement 15A et 15B, situés sur chacun des côtés de la partie avant, considérés axialement. Les pattes de maintien 20A et 20B s'étendent dans le prolongement de ses rebords 15A et 15B. Les rebords 15A et 15B sont dirigés vers l'arrière, c'est-à-dire vers la position que prend le prolongement 17, une fois qu'il a été replié.

Une fois le prolongement replié, les bords libres des joues latérales d'entretoisement 17A et 17B s'étendent respectivement contre la face interne de chacun des rebords 15A et 15B. En d'autres termes, deux joues latérales 17A et 17B sont situées entre les rebords 15A et 15B.

Les joues 17A, 17B et 17C servent à la fois à la rigidification du prolongement 17, et à son entretoisement par rapport à la face arrière 15" de la partie avant 15 de l'oreille 14.

Dans l'exemple représenté, la ceinture 10 du collier présente une section creuse vue de l'intérieur, sensiblement en V ou en U. En effet, cette ceinture 10 présente deux joues latérales opposées 10A et 10B qui, à partir de la périphérie externe de la ceinture 10, s'étendent dans la direction de l'axe A. Ce type de collier sert par exemple à serrer entre eux deux objets ayant des rebords saillants, venant s'accoler et s'insérer dans la partie creuse de la ceinture 10 du collier. Bien entendu, l'invention n'est pas limitée à ce type de configuration, et pourrait aussi bien concerner les colliers de section différente, par exemple une section plate.

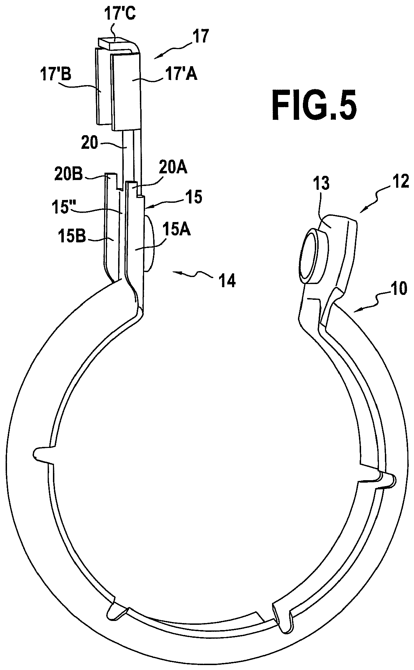

Le collier de la figure 5 est analogue à celui des figures précédemment décrites, à ceci près que les joues latérales 17'A et 17'B du prolongement, de même que sa joue inférieure 17'C, sont formées par emboutissage. Ainsi, considérées ensembles, ces trois joues forment un rebord du prolongement qui, lorsqu'il est replié, s'étend vers la face arrière 15" de la partie avant 15 de l'oreille.

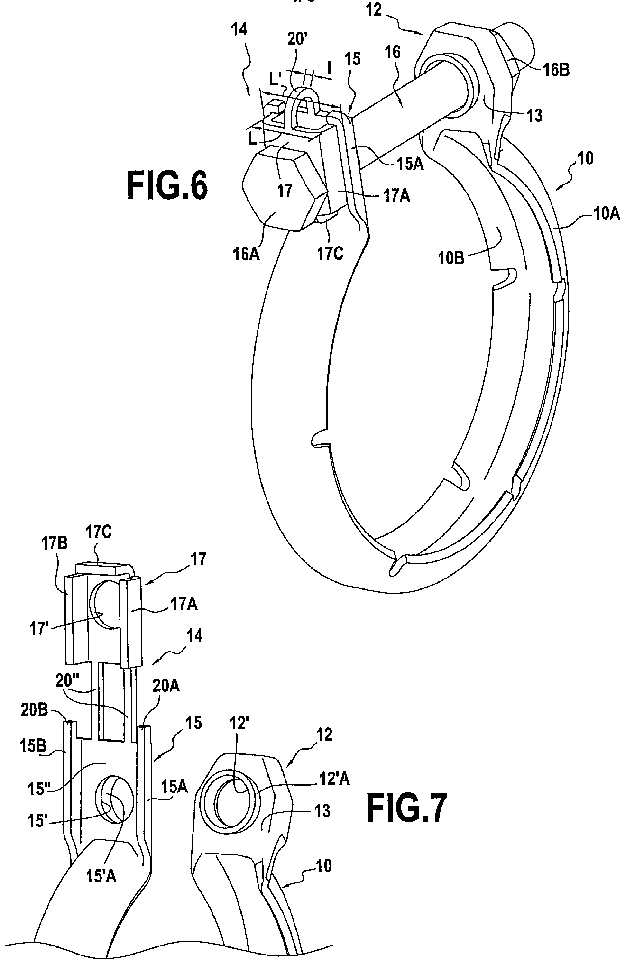

Le collier de la figure 6 est analogue à celui des figures 1 à 4, à ceci près que la boucle de liaison 20' a une largeur l nettement inférieure à la largeur L du prolongement 17 et a en fait pratiquement une forme filaire. Cette boucle 20' se déforme très aisément lors de la mise en forme du pliage du prolongement qui sert à le mettre en forme, de même qu'elle se déforme très facilement sous l'effet des efforts de serrage. Elle peut même aller jusqu'à se rompre lors du serrage. Pour renforcer encore sa capacité à se rompre, elle pourrait présenter localement une zone d'affaiblissement. Dans la mesure où, comme indiqué précédemment, les joues latérales 17A et 17B du prolongement viennent se loger entre les rebords 15A et 15B de la partie avant de l'oreille 14, la largeur L' de la partie avant 15 de l'oreille est même supérieure à la largeur L du prolongement. Par exemple, la largeur I de la boucle de liaison 20' est de l'ordre de 1/5^{ème} ou ¼ de la largeur L du prolongement 17.

La figure 7 montre un collier du même type que celui de la figure 6, dans sa configuration avant que le prolongement 17 ne soit replié. Sur la figure 6, la boucle de liaison 20' de forme sensiblement filaire, est centrée dans le plan médian du collier. Sur la figure 7, la boucle de liaison est formée de deux brins 20", de section filaire, analogue à celle de la boucle 20' de la figure 6. Ces deux brins sont disposés symétriquement par rapport au plan médian du collier passant par l'axe des perçages des oreilles.

On voit encore sur les figures qui viennent d'être décrites que le perçage 12' de l'oreille 12 présente une jupe 12'A, de même que le perçage 15' de la partie avant de l'oreille 14 présente une jupe 15'A. Ces jupes forment palier pour la tige de serrage 16. Ces jupes 12'A et 15'A ont en l'espèce des formes tronconiques, en s'évasant à mesure qu'elles s'éloignent de la face avant des oreilles respectives, pour permettre les débattements angulaires relatifs de la tige de serrage 16, de l'oreille 12 et de la partie avant 15 de l'oreille 14, lors du serrage du collier, ce débattement angulaire étant dû à la réduction du diamètre du collier.

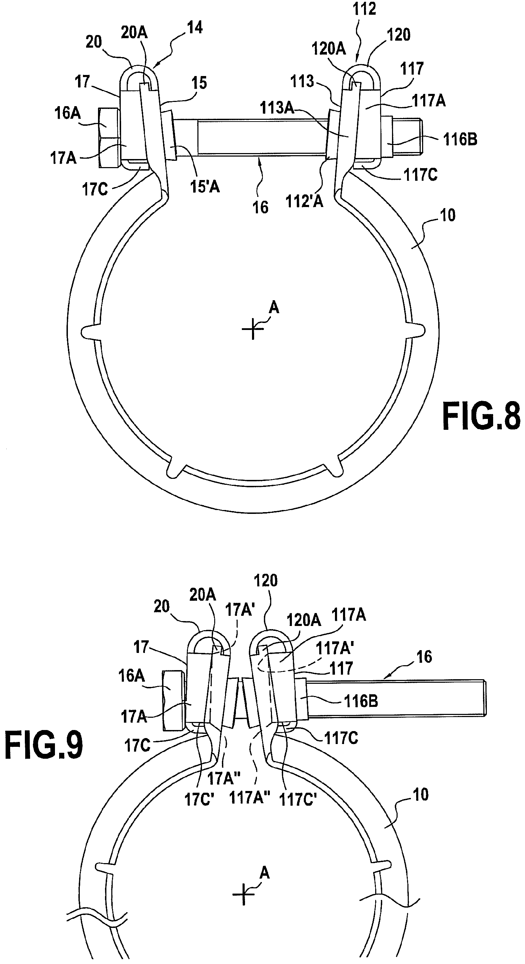

En référence aux figures 8 à 10, on décrit maintenant un collier de serrage selon un deuxième mode de réalisation de l'invention. Dans ce deuxième mode de réalisation, la ceinture 10 du collier est inchangée, de même que l'oreille 14 qui, dans l'exemple représenté, est analogue à celle des figures 1 à 4. La tige de serrage 16, avec sa tête 16A, est également inchangée. Le deuxième mode de réalisation se distingue du premier en ce que, d'une part, la première oreille 112 est également une oreille à prolongement, de conformation globalement analogue à celle de l'oreille 14 et, d'autre part, par le fait que l'écrou 116B pour la tige de serrage 16 est intégré au prolongement de cette première oreille 112.

Plus précisément, l'oreille 112 comporte un prolongement 117, qui est replié vers l'arrière de cette dernière, à l'opposé de sa partie avant 113. Le prolongement 117 est analogue au prolongement 17 qui a été précédemment décrit, et l'on voit qu'il comporte, comme lui, des joues latérales, dont seule la joue 17A est visible sur les figures, et une joue inférieure 117C.

Dans l'exemple représenté, ces joues sont formées par pliage, comme pour les figures 1 à 4, mais il va de soi qu'elles peuvent être formées par emboutissage, ainsi qu'il a été montré en référence à la figure 5.

Le prolongement 117 est relié à la partie avant 113 de l'oreille 112 par une portion de bande 120 formant une boucle de liaison analogue à la boucle de liaison 20 qui a été décrite. Bien entendu, la boucle 120 peut être analogue aux boucles 20' et 20" qui ont été décrites. La partie avant 113 de l'oreille présente des rebords analogues aux rebords 15A qui ont été décrits, seul le rebord 113A étant visible sur les figures. Comme c'est le cas pour l'oreille 14, les joues latérales du prolongement 117 viennent se loger entre les rebords de la partie avant 113 de l'oreille 112. De même, comme la partie avant 15 de l'oreille 14, la partie avant 113 de l'oreille 112 présente des pattes de maintien, dont seule une patte de maintien 120A est visible sur les figures. La partie avant 113 de l'oreille 112 présente encore une jupe 112'A, analogue à la jupe 12'A qui a été décrite en référence à l'oreille 12. On voit que le perçage 117' du prolongement 117 présente un collet taraudé 117'A avec lequel la tige de serrage 16 coopère par vissage. En revanche, cette tige est montée lâche dans le perçage 112' de l'oreille 112 et le perçage 15' de l'oreille 14, de même qu'elle était montée lâche dans les perçages 12', 15' et 17' précédemment évoqués (sur les figures, le perçage du prolongement 17 n'est pas montré, mais il est identique au perçage 17' précédemment évoqué). Ainsi, ce collet taraudé forme un écrou pour la vis de serrage 16. Dans cet exemple, le collier est seulement composé de deux éléments, à savoir la ceinture 10, avec ses oreilles et leurs prolongements qui sont formés en une seule pièce, et, d'autre part, la tige de serrage 16 avec sa tête 16A formée en une seule pièce.

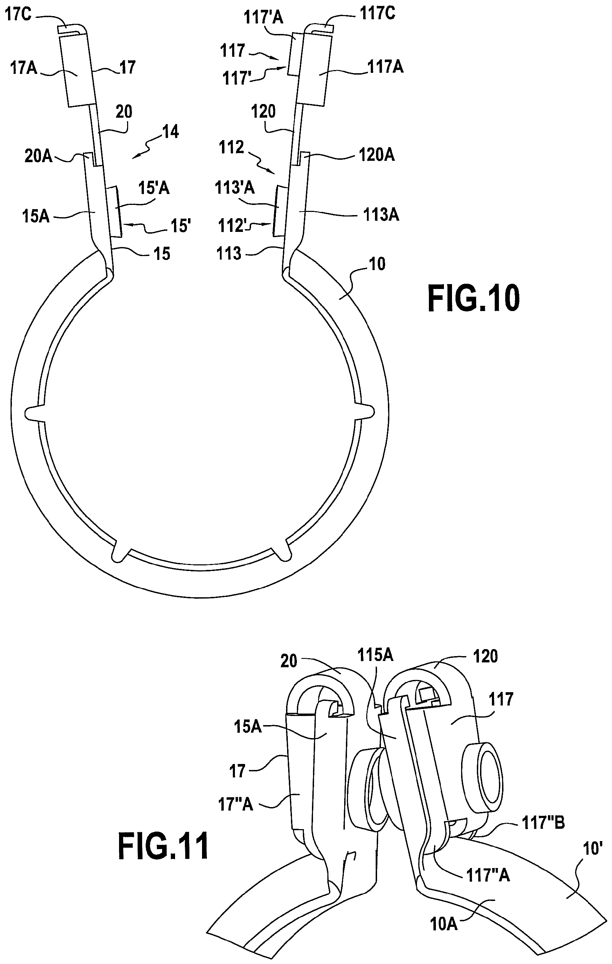

Avant le serrage, les bords inférieurs des joues latérales des prolongements 17 et 117, de même que le bord de la joue inférieure 17C ou 117C, sont légèrement distants des faces arrière des parties avant respectives 113 et 115. En comparant les figures 8 et 9, on comprend que, après le serrage, l'inclinaison des prolongements 17 et 117 par rapport aux parties avant des oreilles s'est modifiée. Dans cette configuration, les bords inférieurs des joues latérales et le bord de la joue inférieure viennent au contact des faces arrière des parties avant respectives 113 et 15, tandis que les bords supérieurs des joues latérales sont légèrement distants de ces faces arrière. Sur les figures, sont représentés les bords supérieurs, respectivement 17A' et 117A' des joues 17A et 117A, les bords inférieurs, respectivement 17A" et 117A" de ces joues latérales, ainsi que les bords, respectivement 17C' et 117C' des joues inférieures. En comparant les figures 8 et 9, on voit également que, lors du serrage, la courbure des boucles de liaison 20 et 120 s'est modifiée, ces boucles ayant eu tendance à s'aplatir vers l'axe A du collier, leurs courbures ayant augmenté. Sur la figure 10, on voit que, initialement, les prolongements 17 et 117 s'étendent respectivement sensiblement, radialement, dans la continuité rectiligne des parties avant, respectivement 15 et 113 des oreilles 14 et 112. Les étapes finales de fabrication du collier, à partir de la situation représentée sur la figure 10, ont consisté à replier les prolongements vers l'arrière des oreilles respectives, en jouant sur la flexibilité des portions de bande formant les boucles de liaison, respectivement 20 et 120. Les pattes de maintien, respectivement 20A et 120A étant respectivement initialement dans le prolongement des rebords 15A et 113A, ces pattes ont ensuite été repliées sur les bords supérieurs des joues latérales des prolongements respectifs. La figure 11 montre une variante de réalisation relative à la conformation des joues latérales d'entretoisement. La ceinture du collier 10 présente une section creuse vue de l'intérieur, c'est-à-dire une section convexe vue de l'extérieur, avec un sommet 10' et des ailes 10A et 10B. Les prolongements 17 et 117 présentent en effet des joues latérales d'entretoisement, la joue 17"A du prolongement 17 et les joues 117"A et 117"B du prolongement 117 étant visibles sur la figure 11. Ces joues latérales sont analogues à celles qui ont été précédemment décrites, à ceci près qu'elles s'étendent plus loin vers l'axe A du collier. En effet, elles s'étendent contre les ailes 10A et 10B de la ceinture du collier, au-delà du sommet 10' de cette ceinture. Ces joues étendues contribuent au calage axial (selon l'axe A du collier) des oreilles par rapport à la ceinture du collier. En elles-mêmes, elles contribuent au calage axial des prolongements mais, dans la mesure où ces joues sont elles-mêmes calées entre les rebords des parties avant des oreilles (les rebords 15A et 115A étant visibles), elles permettent le calage des oreilles, y compris dans leurs parties avant.

Avant le serrage du collier, dans les situations représentées sur les figures 1, 6 et 8, le rayon de courbure r des boucles de liaison 20, 20', 20" ou encore 120, était sensiblement égal au rayon rt de la tige de serrage 16. En fait, selon l'invention, le rayon de courbure avant serrage de la ou les boucles de liaison est de préférence compris entre 0,25 et 1,5 fois ce rayon rt.

## Revendications

1. Collier de serrage présentant une ceinture métallique (10) sensiblement cylindrique, une paire d'oreilles saillantes (12, 14 ; 112) ayant des parties avant (13, 15 ; 113) respectives en vis-à-vis, une tige de serrage (16) disposée dans des perçages (12', 15', 17' ; 112', 117') de ces oreilles et deux organes de serrage (16A, 16B) coopérant avec ladite tige et, respectivement, avec des parties d'appui des deux oreilles de la paire, pour pouvoir rapprocher ces oreilles de manière à provoquer le serrage de la ceinture (10) par une diminution du diamètre de cette dernière, au moins l'une des oreilles de la paire étant une oreille à prolongement, la partie d'appui de cette oreille (14 ; 112) étant formée dans un prolongement (17 ; 117) de ladite oreille, qui est replié vers l'arrière de cette dernière, à l'opposé de l'autre oreille (12 ; 14) de la paire, et qui présente un perçage (17' ; 117') pour la tige de serrage (16) situé en regard d'un perçage (15', 112') de la partie avant (15, 113) de la même oreille (14 ; 112), un espace d'entretoisement (E) étant ménagé entre le prolongement replié (17 ; 117) et ladite partie avant (15, 113), le prolongement (17 ; 117) et la partie avant (15 ; 113) de l'oreille à prolongement (14 ; 112) étant reliés par une portion de bande (20 ; 20' ; 20", 120) formant une boucle de liaison délimitant un tunnel axial dont les deux extrémités axiales (20A, 20B) sont ouvertes, ce tunnel étant conformé de telle sorte que l'inclinaison entre le prolongement (17 ; 117) et la partie avant (15 ; 113) de l'oreille à prolongement (14 ; 112) peut changer lors du serrage du collier, **caractérisé en ce que** la boucle de liaison (20 ; 20' ; 20" ; 120) présente une flexibilité accrue par rapport au prolongement (17 ; 117) et à la partie avant (15 ; 113) de l'oreille à prolongement (14 ; 112).

2. Collier de serrage selon la revendication 1, **caractérisé en ce que**, pour l'oreille à prolongement (14 ; 112), l'un des éléments constitués par le prolongement (17 ; 117) et par la partie avant (15; 113) porte au moins une patte de maintien (20A, 20B ; 120A) repliée dans le tunnel par l'une des extrémités axiales ouvertes de ce dernier.

3. Collier de serrage selon la revendication 1 ou 2, **caractérisé en ce que**, pour l'oreille à prolongement (14 ; 112), au moins l'un des éléments constitués par le prolongement (17 ; 117) et par la partie avant (15 ; 113) comporte au moins une joue d'entretoisement (17A, 17B, 17C ; 17'A, 17'B, 17'C ; 117A, 117C) qui s'étend vers l'autre desdits éléments, sensiblement parallèlement à la tige de serrage (16).

4. Collier de serrage selon la revendication 3, **caractérisé en ce que** le prolongement (17 ; 117) présente deux joues latérales d'entretoisement (17A, 17B, 17'A, 17'B ; 117A ; 17"A, 117"A, 117"B), tandis que la partie avant (15 ; 113) de l'oreille à prolongement (14 ; 112) présente deux rebords de rigidification (15A, 15B ; 113A) qui s'étendent vers le prolongement (17 ; 117) et sont respectivement formés sur les deux bords de ladite partie avant (15 ; 113) opposés axialement, et **en ce que** les bords libres des joues latérales d'entretoisement (17A, 17B ; 117A) s'étendent respectivement contre la face interne de chacun desdits rebords.

5. Collier de serrage selon l'une quelconque des revendications 1 à 4, **caractérisé en ce que**, la ceinture (10) du collier ayant une section convexe vue de l'extérieur, le prolongement (17 ; 117) présente deux joues latérales d'entretoisement (17"A ; 117"A, 117"B) qui s'étendent, vers l'axe (A) du collier au-delà du sommet (10') de ladite section, de part et d'autre dudit sommet.

6. Collier de serrage selon la revendication 3 ou 4, **caractérisé en ce que** le prolongement (17) présente des joues d'entretoisement (17'A, 17'B, 17'C) formées par emboutissage.

7. Collier de serrage selon l'une quelconque des revendications 2 à 6, **caractérisé en ce que** la partie avant (15 ; 113) de l'oreille à prolongement (14 ; 117) présente deux rebords de rigidification (15A, 15B, 113A) qui s'étendent vers le prolongement (17 ; 117) et sont respectivement formés sur les deux bords de ladite partie avant opposés axialement, et **en ce que** l'extrémité de chaque rebord (15A, 15B ; 113A) éloignée de l'axe (A) du collier porte une patte de maintien (20A, 20B ; 120A) qui est repliée dans le tunnel axial.

8. Collier de serrage selon l'une quelconque des revendications 1 à 7, **caractérisé en ce que** les deux oreilles (112, 14) de la paire sont des oreilles à prolongement de conformation analogue.

9. Collier de serrage selon l'une quelconque des revendications 1 à 8, **caractérisé en ce que**, la tige de serrage (16) étant filetée, le perçage du prolongement (117) de l'oreille à prolongement (112) présente un collet taraudé (117'A) coopérant par vissage avec la tige de serrage (16) tandis que ladite tige est montée lâche à travers le perçage (112') de la partie avant (113) de ladite oreille (112).

10. Collier de serrage selon l'une quelconque des revendications 1 à 9, **caractérisé en ce que** le perçage (15 ; 112') de la partie avant de l'oreille à prolongement présente une jupe (15'A ; 113'A) formant palier pour la tige de serrage (16).

11. Collier de serrage selon l'une quelconque des revendications 1 à 10, **caractérisé en ce que** la boucle de liaison présente une largeur (I), mesurée dans la direction axiale du collier, inférieure aux largeurs (L, L') du prolongement (17 ; 117) et de la partie avant (15 ; 113) de l'oreille à prolongement (14 ; 112).

12. Collier de serrage selon l'une quelconque des revendications 1 à 11, **caractérisé en ce que**, à l'état non serré du collier, les extrémités axiales ouvertes du tunnel délimité par la boucle de liaison (20 ; 20' ; 20" ; 120) présentent un rayon de courbure (r) compris entre 0.25 et 1.5 fois le rayon (rt) de la tige de serrage (16).

13. Collier de serrage selon l'une quelconque des revendications 1 à 12, **caractérisé en ce que** la boucle de liaison (20 ; 20' ; 20" ; 120) est sécable.

## Patentansprüche

1. Spannring, umfassend einen im Wesentlichen zylindrischen metallischen Gurt (10), ein Paar von vorstehenden Ösen (12, 14; 112), die jeweils gegenüberliegende Vorderteile (13, 15; 113) aufweisen, eine Spannstange (16), die in Bohrungen (12', 15', 17'; 112', 117') dieser Ösen angeordnet ist, und zwei Spannelemente (16A, 16b), die mit der Stange bzw. mit Stützteilen der beiden Ösen des Paars zusammenwirken, um diese Ösen annähern zu können, um das Spannen des Gurts (10) durch eine Verringerung des Durchmessers dieses letztgenannten hervorzurufen, wobei mindestens eine der Ösen des Paars eine Öse für Verlängerung ist, wobei der Stützteil dieser Öse (14; 112) in einer Verlängerung (17; 117) der Öse gebildet ist, die nach hinten zu dieser letztgenannten gegenüber der anderen Öse (12; 14) des Paars umgeklappt ist, und die eine Bohrung (17'; 117') für die Spannstange (16) aufweist, die sich gegenüber einer Bohrung (15', 112') des vorderen Teils (15, 113) derselben Öse (14; 112) befindet, wobei ein Distanzraum (E) zwischen der umgeklappten Verlängerung (17; 117) und dem vorderen Teil (15, 113) ausgenommen ist, wobei die Verlängerung (17; 117) und der vordere Teil (15; 113) der Öse für Verlängerung (14; 112) durch einen Bandabschnitt (20; 20'; 20", 120) verbunden sind, der eine Verbindungsschleife bildet, die einen axialen Tunnel begrenzt, dessen beiden axialen Enden (20A, 20B) offen sind, wobei dieser Tunnel derart ausgebildet ist, dass die Neigung zwischen der Verlängerung (17; 117) und dem vorderen Teil (15; 113) der Öse für Verlängerung (14; 112) sich beim Spannen des Ringes verändern kann, **dadurch gekennzeichnet, dass** die Verbindungsschleife (20; 20'; 20"; 120) eine erhöhte Flexibilität im Vergleich mit der Verlängerung (17; 117) und dem vorderen Teil (15; 113) der Öse für Verlängerung (14; 112) aufweist.

2. Spannring nach Anspruch 1, **dadurch gekennzeichnet, dass** für die Öse (14; 112) für Verlängerung eines der Elemente, die von der Verlängerung (17; 117) und von dem vorderen Teil (15; 113) gebildet ist, mindestens eine Haltelasche (20A, 20B; 120A) trägt, die in den Tunnel durch eines der offenen axialen Enden dieses letztgenannten eingeklappt ist.

3. Spannring nach Anspruch 1 oder 2, **dadurch gekennzeichnet, dass** für die Öse (14; 112) für Verlängerung mindestens eines der Elemente, die von der Verlängerung (17; 117) und von dem vorderen Teil (15; 113) gebildet ist, mindestens eine Distanzwange (17A, 17B, 17C; 17'A, 17'B, 17'C; 117A, 117C) umfasst, die sich zum anderen der Elemente im Wesentlichen parallel zur Spannstange (16) erstreckt.

4. Spannring nach Anspruch 3, **dadurch gekennzeichnet, dass** die Verlängerung (17; 117) zwei seitliche Distanzwangen (17A, 17B, 17'A, 17'B; 117A; 17"A, 117"A, 117"B) aufweist, während der vordere Teil (15; 113) der Öse (14; 112) für Verlängerung zwei Versteifungsumrandungen (15A, 15B; 113A) aufweist, die sich zur Verlängerung (17; 117) hin erstrecken und jeweils auf den beiden axial entgegengesetzt liegenden Rändern des vorderen Teils (15; 113) ausgebildet sind, und dass sich die freien Ränder der seitlichen Distanzwangen (17A, 17B; 117A) gegen die Innenseite jeder der Umrandungen erstrecken.

5. Spannring nach einem der Ansprüche 1 bis 4, **dadurch gekennzeichnet, dass** der Gurt (10) des Rings einen von außen gesehen konvexen Querschnitt hat und die Verlängerung (17; 117) zwei seitliche Distanzwangen (17"A; 117"A, 117"B) aufweist, die sich zur Achse (A) des Rings über die Spitze (10') des Querschnitts hinweg beiderseits der Spitze erstrecken.

6. Spannring nach Anspruch 3 oder 4, **dadurch gekennzeichnet, dass** die Verlängerung (17) Distanzwangen (17'A, 17'B, 17'C) aufweist, die durch Tiefziehen gebildet sind.

7. Spannring nach einem der Ansprüche 2 bis 6, **dadurch gekennzeichnet, dass** der vordere Teil (15; 113) der Öse (14; 112) für Verlängerung zwei Versteifungsumrandungen (15A, 15B, 113A) aufweist, die sich zu der Verlängerung (17; 117) hin erstrecken und jeweils auf den beiden axial entgegengesetzt liegenden Rändern des vorderen Teils ausgebildet sind, und dass das Ende jeder Umrandung (15A, 15B; 113A), das von der Achse (A) des Rings entfernt ist, eine Haltelasche (20A, 20B; 120A) trägt, die in den axialen Tunnel eingeklappt ist.

8. Spannring nach einem der Ansprüche 1 bis 7, **dadurch gekennzeichnet, dass** die beiden Ösen (112, 14) des Paars Ösen mit Verlängerung von analoger Ausführung sind.

9. Spannring nach einem der Ansprüche 1 bis 8, **dadurch gekennzeichnet, dass** die Spannstange (16) ein Gewinde hat und die Bohrung der Verlängerung (117) der Öse (112) für Verlängerung einen Gewindekragen (117'A) aufweist, der durch Schrauben mit der Spannstange (16) zusammenwirkt, während die Stange lose durch die Bohrung (112') des vorderen Teils (113) der Öse (112) montiert ist.

10. Spannring nach einem der Ansprüche 1 bis 9, **dadurch gekennzeichnet, dass** die Bohrung (15; 112') des vorderen Teils der Öse für Verlängerung eine Schürze (15'A; 113'A) aufweist, die ein Lager für die Spannstange (16) bildet.

11. Spannring nach einem der Ansprüche 1 bis 10, **dadurch gekennzeichnet, dass** die Verbindungsschleife eine Breite (I), gemessen in Axialrichtung des Rings, aufweist, die kleiner als die Breiten (L, L') der Verlängerung (17; 117) und des vorderen Teils (15; 113) der Öse (14; 112) für Verlängerung ist.

12. Spannring nach einem der Ansprüche 1 bis 11, **dadurch gekennzeichnet, dass** im nicht gespannten Zustand des Ringes die offenen axialen Enden des Tunnels, der von der Verbindungsschleife (20; 20'; 20"; 120) begrenzt ist, einen Krümmungsradius (r) zwischen 0,25- und 1,5-mal den Radius (rt) der Spannstange (16) aufweisen.

13. Spannring nach einem der Ansprüche 1 bis 12, **dadurch gekennzeichnet, dass** die Verbindungsschleife (20; 20'; 20"; 120) durchtrennbar ist.

## Claims

1. A clamping collar having a substantially cylindrical metal belt (10), a pair of projecting lugs (12, 14; 112) having respective facing front portions (13, 15; 113), a tightening rod (16) disposed in holes (12', 15', 17'; 112', 117') in said lugs, and two tightening members (16A, 16B) co-operating with said rod and with respective ones of bearing portions of the two lugs in the pair to move the lugs closer together in such a manner as to cause the belt (10) to be tightened by reducing the diameter of said belt, at least one of the lugs in the pair being a lug having an extension, the bearing portion of said lug (14; 112) being formed in an extension (17; 117) of said lug, which extension is folded over towards the rear of said lug, away from the other lug (12; 14) in the pair, and is provided with a hole (17', 117') for the tightening rod (16), which hole is situated facing a hole (15', 112') in the front portion (15, 113) of the same lug (14; 112), a bracing space (E) being provided between the folded-over extension (17; 117) and said front portion (15; 113), the extension (17; 117) and the front portion (15; 113) of the lug (14; 112) having an extension being interconnected via a strip portion (20; 20'; 20", 120) forming a link loop defining an axial tunnel having its two axial ends (20A, 20B) open, said tunnel being shaped so that the angle of inclination between the extension (17; 117) and the front portion (15; 113) of the lug (14; 112) having an extension can change when the collar is tightened, **characterized in that** the link loop (20; 20'; 20"; 120) has greater flexibility than the extension (17; 117) and than the front portion (15; 113) of the lug (14; 112) having an extension.

2. A clamping collar according to claim 1, **characterized in that**, for the lug (14; 112) having an extension, one of the elements constituted by the extension (17; 117) and by the front portion (15; 113) carries at least one holding tab (20A, 20B; 120A) folded over into the tunnel via one of its open axial ends.

3. A clamping collar according to claim 1 or claim 2, **characterized in that**, for the lug (14; 112) having an extension, at least one of the elements constituted by the extension (17; 117) and by the front portion (15; 113) has at least one bracing cheek (17A, 17B, 17C; 17'A, 17'B, 17'C; 117A, 117C) that extends towards the other of said elements, substantially parallel to the tightening rod (16).

4. A clamping collar according to claim 3, **characterized in that** the extension (17; 117) has two bracing side cheeks (17A, 17B, 17'A, 17'B; 117A; 17"A, 117"A, 117"B), while the front portion (15; 113) of the lug (14; 112) having an extension has two stiffening lips (15A, 15B; 113A) that extend towards the extension (17; 117) and that are formed on respective ones of the two axially opposite edges of said front portion (15; 113), and **in that** the free edges of the bracing side cheeks (17A, 17B; 117A) extend against the inside faces of respective ones of said lips.

5. A clamping collar according to any one of claims 1 to 4, **characterized in that**, with the belt (10) of the collar being of convex section as seen from the outside, the extension (17; 117) has two bracing side cheeks (17"A; 117"A, 117"B) that extend towards the axis (A) of the collar beyond the crest (10') of said section, on either side of said crest.

6. A clamping collar according to claim 3 or 4, **characterized in that** the extension (17) has bracing cheeks (17'A, 17'B, 17'C) formed by die-stamping.

7. A clamping collar according to any one of claims 2 to 6, **characterized in that** the front portion (15; 113) of the lug (14; 117) having an extension has two stiffening lips (15A, 15B, 113A) that extend towards the extension (17; 117) and are formed on respective ones of the two axially opposite edges of said front portion, and **in that** the end of each lip (15A, 15B; 113A) that is further from the axis (A) of the collar carries a holding tab (20A, 20B; 120A) that is folded over into the axial tunnel.

8. A clamping collar according to any one of claims 1 to 7, **characterized in that** both of the lugs (112, 14) in the pair are lugs that have extensions and that are shaped analogously to each other.

9. A clamping collar according to any one of claims 1 to 8, **characterized in that**, with the tightening rod (16) being threaded, the hole in the extension (117) of the lug (112) having an extension has a tapped neck (117'A) co-operating, by screwing, with the tightening rod (16) while said rod is mounted loosely through the hole (112') in the front portion (113) of said lug (112).

10. A clamping collar according to any one of claims 1 to 9, **characterized in that** the hole (15; 112') in the front portion of the lug having an extension has a skirt (15'A. 113'A) forming a bearing for the tightening rod (16).

11. A clamping collar according to any one of claims 1 to 10, **characterized in that** the link loop has a width (ℓ), measured in the axial direction of the collar, that is less than the widths (L, L') of the extension (17; 117) and of the front portion (15; 113) of the lug (14; 112) having an extension.

12. A clamping collar according to any one of claims 1 to 11, **characterized in that**, when the collar is in the non-tightened state, the open axial ends of the tunnel defined by the link loop (20; 20'; 20"; 120) have a radius of curvature (r) lying in the range 0.25 times the radius (rt) of the tightening rod (16) to 1.5 times the radius of said tightening rod.

13. A clamping collar according to any one of claims 1 to 12, **characterized in that** the link loop (20; 20'; 20"; 120) is suitable for being broken.
